# FASCICULE DE BREVET EUROPEEN

(11) **EP 0 483 720 B1**
(45) Date de publication et mention de la délivrance du brevet: **13.09.1995**
(21) Numéro de dépôt: 91118338.2
(22) Date de dépôt: 28.10.1991
(51) Int. Cl.: H01P 1/00, H01Q 1/12, B23Q 1/25

(54) **Dispositif de fixation dans l'espace**
Befestigungsvorrichtung im Raum
Fastening device in space

(30) Priorité: 30.10.1990 FR 9013451
(43) Date de publication de la demande: 06.05.1992
(73) Titulaire: ALCATEL TELSPACE, 92734 Nanterre Cédex (FR)
(72) Inventeur: Remblier, Michel, F-95430 Auvers sur Oise (FR)
(74) Mandataire: Weinmiller, Jürgen

(56) Documents cités:
- WO-A-80/01366
- DE-B- 1 234 288
- FR-A- 492 526
- GB-A- 1 551 730
- US-A- 2 667 318
- US-A- 2 960 806
- US-A- 4 251 819
- US-A- 4 390 172

## Description

L'invention concerne in dispositif de fixation dans l'espace.

Il est connu de relier deux éléments par l'intermédiaire d'une pièce intermédiaire et de plusieurs vis, comme décrit dans la demande de brevet européen EP-A-0274084 cette pièce intermédiaire pouvant avoir une forme d'équerre, comme dans le brevet US-A-2 667 318.

Il est également connu de fixer une pièce dans une position voulue sur une autre pièce à l'aide d'un boulon de serrage et de quatre vis de réglage par butée comme décrit dans le brevet FR-A-492 526.

Dans le cas particulier des hyperfréquences il est nécessaire de réaliser un positionnement précis des modules hyperfréquences et des guides d'ondes de formes aléatoires. Il est important également de pouvoir démonter ces pièces en gardant éventuellement la mémoire de la position optimale.

L'invention a pour but de réaliser cet objectif.

Elle propose, à cet effet, un dispositif de fixation dans l'espace d'un premier élément à positionner par rapport à un second élément, comprenant au moins une pièce support jouant le rôle d'intermédiaire entre deux accrochages : l'un au premier élément l'autre au second; cette pièce support ayant la forme d'une équerre comportant deux bras formant entre eux un angle déterminé; chacun de ces bras étant percé d'alésages dans lesquels peuvent être introduits des éléments de fixation à l'un desdits éléments et de butée contre l'un desdits éléments; un élément de fixation et au moins trois éléments de butée étant implantés sur chacun de ces bras, de manière à permettre la réalisation de chacun de ces deux accrochages.

Avantageusement ce dispositif permet de réaliser dans l'espace le maintien en position rigide, sans contrainte mécanique et sans usinage particulièrement précis, d'éléments hyperfréquences, de guides d'ondes ou de tout autres éléments, avec la possibilité de conserver la mémoire de cette position dans le cas de démontage et remontage du même élément, ou, sans conserver la mémoire de la position, dans le cas de démontage de l'élément en place et son remplacement par un nouvel élément.

Les caractéristiques et avantages de l'invention ressortiront de la description qui va suivre, à titre d'exemple non limitatif, en référence aux dessins annexés sur lesquels :
- la figure 1 illustre schématiquement le dispositif de fixation selon l'invention;
- les figures 2 à 5 illustrent différents aspects du dispositif de fixation selon l'invention;
- la figure 6 illustre un exemple de réalisation du dispositif selon l'invention.

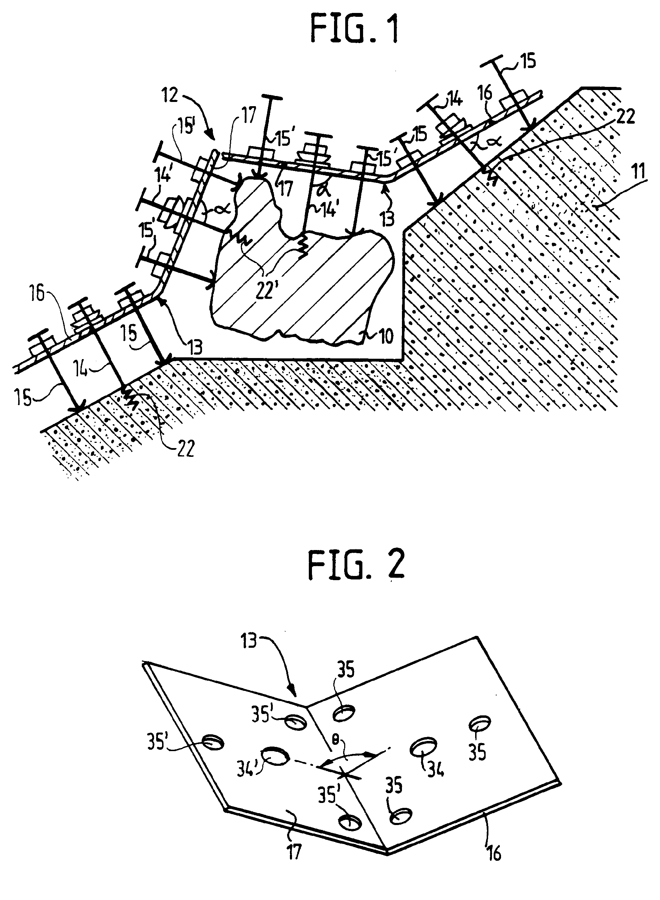

La figure 1 représente schématiquement la fixation d'un élément 10 par rapport à un bâti 11 de forme quelconque au moyen du dispositif 12 de l'invention.

Ce dispositif 12 comprend au moins une pièce support 13 rigide, ici au nombre de deux, ayant la forme d'une équerre, et comportant donc deux bras 16 et 17 tels que représentés sur la figure 1, sur laquelle sont implantées, respectivement sur chaque face de ladite pièce;
- un élément 14 (14′) de fixation;
- trois éléments 15 (15′) de butée;

Les éléments 14 et 15 de fixation et de butée, associés au premier bras 16 de ladite pièce 13 portent sur le bâti 11. Les éléments 14′ et 15′ de fixation et de butée associés au second bras 17 de ladite pièce 13 portent sur l'élément 10 à positionner.

Ainsi la pièce support 13 joue le rôle d'intermédiaire entre deux accrochages : l'un au bâti 11, l'autre à l'élément 10 à positionner.

La pièce support 13 représentée sur la figure 2 a la forme d'une équerre comportant deux bras 16 et 17 formant entre eux un angle ϑ aigu ou optu; chacun de ces bras 16 et 17 étant percé d'alésages 34, 35 (34′, 35′) dans lesquels peuvent être introduits les éléments de fixation 14 (14′) et de butée 15(15′). Mais elle peut avoir tout autre forme telle qu'elle présente deux parties planes, formant entre elles cet angle ϑ, sur lesquelles soient implantés ces différents éléments 14 et 15 (14' et 15′).

Les points de contact entre les trois éléments de butée associés 15 ou (15′) et le bâti 11 ( ou l'élément 10 à positionner) permettent, en effet, de définir un et un seul plan de réglage.

Lors du positionnement de l'élément 10 par rapport au bâti 11, on place et on règle successivement les éléments de fixation 14 et 14′ par traction, et les éléments de butée 15 et 15′ par poussée.

Lors du démontage de l'élément 10, si l'on veut garder une mémoire mécanique de la position obtenue, on doit mémoriser la position des éléments de butée 15 et 15′.

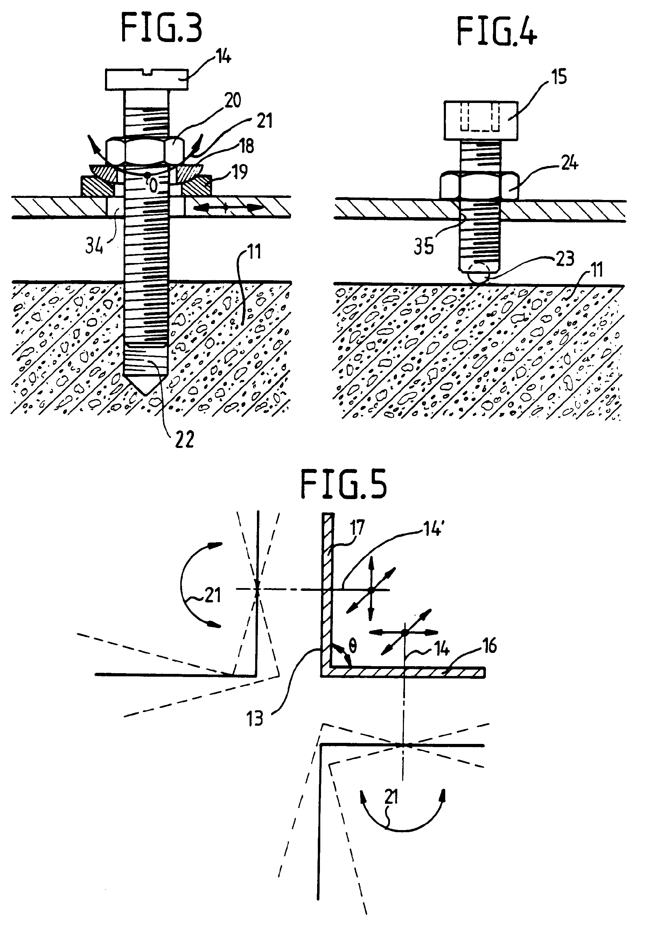

Dans un exemple de réalisation les éléments de fixation 14 et 14′ sont des vis en appui sur deux rondelles sphériques 18 et 19 d'une (18) concave et l'autre (19) convexe avec un contre-écrou 20. Une telle vis peut donc pivoter autour d'un point 0 situé sur son axe de symétrie, la première rondelle 18 glissant alors dans la seconde rondelle 19 selon un mouvement 21 comme représenté sur les figures 3 et 5. Une telle vis 14 ou 14′ est donc introduite dans un filetage correspondant 22 ou 22′ réalisé dans le bâti 11 ou dans l'élément 10.

Les éléments de butée 15 et 15′ sont des vis à embouts sphériques 23 ou à embouts à rotules, munies d'un contre-écrou 24.

Comme représenté sur la figure 1 ces différentes vis sont implantées sur les deux bras 16 et 17 des deux pièces support 13, qui sont réalisés en tôle pliée ou soudée.

Comme représenté sur la figure 5, les vis de fixation 14 et 14′ permettent de maintenir sans contrainte, un espace constant d'une part entre le premier élément support 13 et le bâti 11, et d'autre part entre le second élément support et l'élément 10.

Les vis de butée 15 et 15′ acceptent les défauts de parallélisme et les variations des formes entre l'élément à maintenir et le support.

La fonction "mémoire de la position" est réalisée par ces vis de butée 15 et 15′ et leurs contre-écrous respectifs; elle est indispensable pour remonter l'élément qui vient d'être démonté sans nouveau réglage. Cette fonction peut être annulée par desserrage des contre-écrous des vis de butée 15 et 15′ pour permettre, par exemple, le positionnement d'un nouvel élément 10 de forme différente.

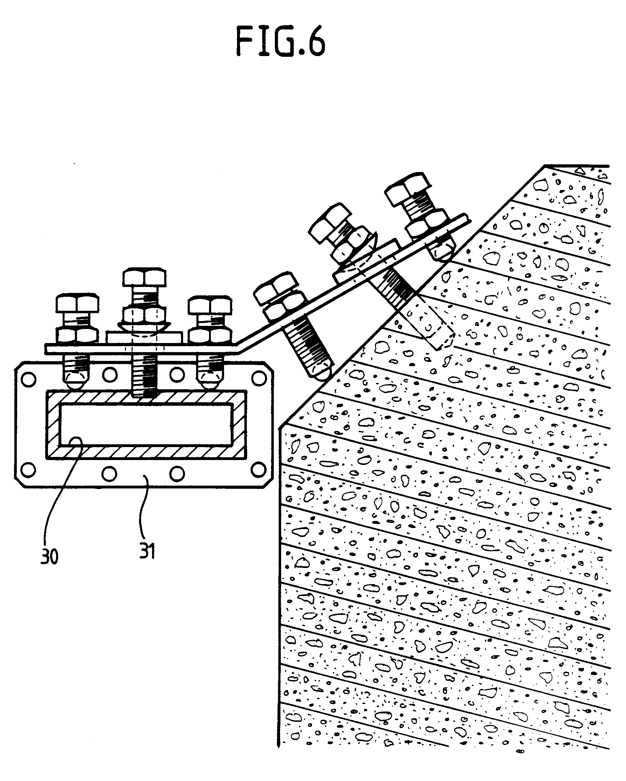

La figure 6 donne un exemple de réalisation du dispositif de l'invention dans le domaine des hyperfréquences. L'élément 10 à positionner est alors un guide d'onde 30 de section rectangulaire, muni d'une collerette de fixation 31. Le dispositif de l'invention est alors très avantageux car les côtes internes d'un tel guide d'onde hyperfréquence sont très précises en ce qui concerne les parois internes. Il n'en est pas de même en ce qui concerne les parois externes. Lorsque l'on veut démonter ou remplacer un guide d'onde, dans les dispositifs de l'art connu il y a obligation de recommencer les réglages du fait des exigences de précision; ce qui n'est plus le cas avec le dispositif de l'invention.

## Revendications

1. Dispositif de fixation dans l'espace d'un premier élément (10) à positionner par rapport à un second élément (11), comprenant au moins une pièce support (13) jouant le rôle d'intermédiaire entre deux accrochages : l'un au premier élément (10) l'autre au second (11), cette pièce support (13) ayant la forme d'une équerre comportant deux bras (16, 17) formant entre eux un angle déterminé; caractérisé en ce que chacun de ces bras est percé d'alésages (34, 35′; 34′, 35) dans lesquels peuvent être introduits des éléments de fixation (14, 14′) à l'un desdits éléments (10, 11) et de butée (15, 15′) contre l'un desdits éléments (10, 11); un élément de fixation (14, 14′) et au moins trois éléments de butée (15, 15′) étant implantés sur chacun de ces bras, de manière à permettre la réalisation de chacun de ces deux accrochages.

2. Dispositif selon la revendication 1, caractérisé en ce que le second élément (11) est un bâti.

3. Dispositif selon l'une quelconque des revendications précédentes, caractérisé en ce qu'il comporte deux pièces support (13).

4. Dispositif selon l'une quelconque des revendications précédentes, caractérisé en ce que chaque élément de fixation (14, 14′) est une vis qui peut pivoter autour d'un point (0) de son axe de symétrie.

5. Dispositif selon la revendication 4, caractérisé en ce que cette vis (14, 14′) comporte une première rondelle sphérique convexe (19) fixée sur la pièce support (13) correspondante, et une seconde rondelle concave (18) dont la partie concave peut glisser sur la partie convexe de la première rondelle (19).

6. Dispositif selon la revendication 5, caractérisé en ce que cette vis (14, 14′) comporte un contre-écrou (20).

7. Dispositif selon l'une quelconque des revendications précédentes, caractérisé en ce que chaque élément de butée (15, 15′) est une vis dont l'extrémité comporte une portée sphérique (23).

8. Dispositif selon la revendication 7, caractérisé en ce que cette vis (15, 15′) comporte un contre-écrou (24).

9. Dispositif selon l'une quelconque des revendications précédentes caractérisé en ce que l'élément à positionner est un module hyperfréquence ou un guide d'onde.

## Patentansprüche

1. Vorrichtung zur räumlichen Fixierung eines ersten Elements (10), das in Bezug auf ein zweites Element (11) zu positionieren ist, die mindestens einen Träger (13) aufweist, der die Rolle eines Zwischenteils zwischen zwei Verankerungen spielt: die erste am ersten Element (10) und die zweite am zweiten Element (11), wobei dieser Träger (13) die Form eines Winkelstücks mit zwei Schenkeln (16, 17) hat, die zwischen sich einen bestimmten Winkel bilden, dadurch gekennzeichnet, daß jeder dieser Schenkel Bohrungen (34, 35; 34′, 35′) aufweist, in die Elemente (14, 14′; 15, 15′) ) zur Verankerung an einem der Elemente (10, 11) und zum Anschlag gegen eines der Elemente (10, 11) eingeführt werden können, wobei ein Verankerungselement (14, 14′) und mindestens drei Anschlagelemente (15, 15′) auf jedem dieser Schenkel angeordnet sind, um die Herstellung jeder dieser beiden Verankerungen zu erlauben.

2. Vorrichtung nach Anspruch 1, dadurch gekennzeichnet, daß das zweite Element (11) ein Gestell ist.

3. Vorrichtung nach einem beliebigen der vorhergehenden Ansprüche, dadurch gekennzeichnet, daß sie zwei Träger (13) aufweist.

4. Vorrichtung nach einem beliebigen der vorhergehenden Ansprüche, dadurch gekennzeichnet, daß jedes Verankerungselement (14, 14′) eine Schraube ist, die um einen Punkt (0) ihrer Symmetrieachse schwenken kann.

5. Vorrichtung nach Anspruch 4, dadurch gekennzeichnet, daß diese Schraube (14, 14′) eine erste kugelförmige konvexe Lochscheibe (19), die auf dem entsprechenden Träger (13) befestigt ist, und eine zweite konkave Lochscheibe (18) aufweist, deren konkaver Teil auf dem konvexen Teil der ersten Lochscheibe (19) gleiten kann.

6. Vorrichtung nach Anspruch 5, dadurch gekennzeichnet, daß diese Schraube (14, 14′) eine Kontermutter (20) aufweist.

7. Vorrichtung nach einem beliebigen der vorhergehenden Ansprüche, dadurch gekennzeichnet, daß jedes Anschlagelement (15, 15′) eine Schraube ist, deren Ende eine kugelförmige Auflagefläche (23) aufweist.

8. Vorrichtung nach Anspruch 7, dadurch gekennzeichnet, daß diese Schraube (15, 15′) eine Kontermutter (24) aufweist.

9. Vorrichtung nach einem beliebigen der vorhergehenden Ansprüche, dadurch gekennzeichnet, daß das zu positionierende Element ein Mikrowellenmodul oder ein Hohlleiter ist.

## Claims

1. A device for fixing a first element (10) to be positioned in three dimensions relative to a second element (11), the device comprising at least one support piece (13) acting as a connecting member between two connections: a first with the first element (10); and a second with the second element (11); the support piece (13) being in the form of a bracket comprising two arms (16, 17) at a determined angle relative to each other; the device being characterized in that each of the arms is pierced by holes (34, 35; 34′, 35′) in which fixing and abutment components (14, 14′; 15, 15′) can be inserted for fixing to one of said elements (10, 11) and for abutment against one of said elements (10, 11); at least one fixing component (14, 14′) and at least three abutment components (15, 15′) being installed on each of said arms for the purpose of implementing each of said two connections.

2. A device according to claim 1, characterized in that the second element (11) is a structure.

3. A device according to any preceding claim, characterized in that it comprises two support pieces (13).

4. A device according to any preceding claim, characterized in that each fixing component (14, 14′) is a screw mounted to pivot about a point (0) on its axis of symmetry.

5. A device according to claim 4, characterized in that said screw (14, 14′) co-operates with a convex spherical first washer (19) fixed on the corresponding support piece (13) and with a concave second washer (18) whose concave portion is slidably received on the convex portion of the first washer (19).

6. A device according to claim 5, characterized in that said screw (14, 14′) co-operates with a lock nut (20).

7. A device according to any preceding claim, characterized in that each abutment component (15, 15′) is a screw whose tip includes a spherical bearing surface (23).

8. A device according to claim 7, characterized in that each abutment screw (15, 15′) co-operates with a lock nut (24).

9. A device according to any preceding claim, characterized in that the element to be positioned is a waveguide or a microwave module.
